# EUROPEAN PATENT APPLICATION

(11) **EP 1 645 457 A1**
(43) Date of publication of application: **12.04.2006**
(21) Application number: 04104903.2
(22) Date of filing: 06.10.2004
(51) Int. Cl.: B60N 2/02, B60N 2/48

(54) **Active headrest system**

(71) Applicant: IEE INTERNATIONAL ELECTRONICS & ENGINEERING S.A., 6468 Echternach (LU)
(72) Inventor: Schockmel, Paul, 8216 Mamer (LU)
(74) Representative: Beissel, Jean

(57) **Abstract**

A safety system for an automotive vehicle comprises a headrest associated with a vehicle seat, and an actuator for adjusting a position of said headrest with respect to the vehicle seat. According to the invention, the system further comprises an optical imager system associated with said vehicle seat, said optical imager system for determining a position of a seat occupant portion, and a control unit operatively coupled to said optical imager system and to said actuator, said control unit for generating a control signal for said actuator based on the position determined by said optical imager system and on an actual position of said headrest, said control signal controlling said actuator for moving the headrest in a predetermined position with respect to the seat occupant portion.

## Description

### Introduction

The present invention generally relates to an active headrest system for an automotive vehicle and more specifically to a system for automatically adjusting the position of a headrest in order to reduce whiplash injuries in case of a crash.

Yearly more than one million European citizens suffer neck injuries from car collisions. These injuries often give rise to long lasting consequences for the individuals. The economical costs for the European society are estimated in the order of five to ten billion EURO per year. Outside Europe, similar dramatic figures have been reported. One third (and in some countries even more) of all injury insurance claims are due to neck injuries. About 50% of the neck injuries occur in rear-end impacts. Other collision types with a high frequency of neck injuries are frontal and oblique impacts. It is expected that whiplash injuries can be reduced significantly by improvements in vehicle design, in particular the seat/head restraint system and the restraint system.

Headrests are supposed to provide protection against whiplash in rear-end collisions. An effective headrest is arranged directly behind the centreline of the head and positioned no more than a 5 cm away. In reality most headrests provide little to no protection. A study conducted by NHTSA shows that more than 70% of the head rests' height is not adjusted properly to the occupant.

Manufacturers are therefore looking at more effective systems and many are introducing so called "active" head restraints that aim to limit the distance between the head and the restraint during a crash.

One such system is disclosed in US patent 5,694,320. This document discloses an active headrest system, comprising ultrasonic sensors arranged inside the headrest for determining a distance between the head of a passenger and the headrest. In case of a crash, the headrest is moved forward towards the head of the passenger based on the distance previously determined. A disadvantage of this system is that the operation of the ultrasonic sensors may be perturbed by an object such as a piece of clothing hanging on the headrest. Furthermore, the system disclosed in US patent 5,694,320 is not reliably in case of a passenger wearing a hat or other object on the head.

### Object of the invention

The object of the present invention is to provide an improved active headrest system for an automotive vehicle.

### General description of the invention

This problem is solved by a safety system according to claim 1. The proposed safety system for an automotive vehicle comprises a headrest associated with a vehicle seat, and an actuator for adjusting a position of said headrest with respect to the vehicle seat. According to the invention, the system further comprises an optical imager system associated with said vehicle seat, said optical imager system for determining a position of a seat occupant portion, and a control unit operatively coupled to said optical imager system and to said actuator, said control unit for generating a control signal for said actuator based on the position determined by said optical imager system and on an actual position of said headrest, said control signal controlling said actuator for moving the headrest in a predetermined position with respect to the seat occupant portion.

Instead of a reflexive detection system based on ultrasonic sensors, the present invention relies upon an optical imager system for determining the position of the head of a seat occupant in the car. Such optical imager system may be mounted at any suitable location in the vehicle interior where obstruction e.g. by clothing may not occur. The optical imager system may e.g. be arranged in the vehicle head lining, so that the passenger head and the headrest are located in the field of view of the imager. In contrast to the known reflexive detection system, the optical imager system allows object recognition by applying suitable object recognition algorithms, which are known in the art. An object localized in the field of view of the imager system, which is different from the passenger head, may thus be recognized and subsequently ignored for the determination of the head position. It follows that the head position with respect to the headrest may be determined with much better reliability than with the prior art devices.

Furthermore, the optical imager system enables a determination of the relative position of the passenger head with respect to the headrest in the two relevant directions, i.e. in vertical direction and in horizontal direction. A single imager system may be used for the determination of inappropriate positioning of the headrest in those two directions and accordingly enables the generation of a control signal for adjusting the headrest position in both directions. It follows that the headrest position may not only adjusted in horizontal direction, wherein the headrest is moved closer to the passenger head, but also in vertical direction, where a height position of the headrest is adapted to a height and seating position of the passenger. With the proposed safety system, the position of the headrest may thus be optimized with respect to the seat occupant head so as to minimize the risk of whiplash injuries during a crash situation.

In a possible embodiment, the control unit generates the control signal for said actuator based among others on an actual position of said headrest, which is determined by means of a dedicated headrest position sensor operatively coupled to said control unit. In a preferred embodiment however said actual position of said headrest is determined by means of said optical imager system. In this embodiment, no separate position sensor is required which reduces the overall costs of the system. Furthermore, the determination of both the position of the seat occupant head and the actual position of the headrest reduces the data processing for determining the relative position of the passenger head with respect to the headrest.

In order to be able to reliably detect the relative positions of the seat occupant head and the headrest, the optical imager system may comprise a 3D camera or a stereo-camera system or at least two 2D cameras, said two 2D cameras being arranged in the vehicle interior at a certain distance from each other, or a single 2D camera, said single 2D camera being arranged in said vehicle interior so that a field of view of said 2D camera includes a lateral view of said seat occupant portion and/or said headrest, or any combination thereof.

As described above, the safety system according to the present invention enables an optimization of the headrest position with respect to a passenger head adapted for best possible protection of the passenger. This optimization of the headrest position by generating a corresponding control signal may be performed continuously or periodically during normal operation of the car, so that the headrest takes continuously an optimal position with respect to the passenger head. In another embodiment, the control signal is only generated in a crash situation or immediately prior to crash-situation of said car, i.e. only at the moment, when optimum positioning is required. In a further possible embodiment, the position of the headrest may be continuously adapted only in one of the two relevant directions (e.g. the vertical direction), while the positioning in the other direction is only optimized in a crash situation.

It should be noted, that if suitably arranged within the vehicle interior, the field of view of the optical imager system includes more than one seat. In this case, the optical imager system may be associated to a plurality of vehicle seats for determining the position of seat occupant portion of seat occupants sitting in any one of said plurality of vehicle seats. One single imager system may thus be used for optimization of the headrest positions of a plurality of vehicle seats.

### Detailed description with respect to the figures

The present invention will be more apparent from the following description of several not limiting embodiments with reference to the attached drawings, wherein
- Fig.1:: a side view of a passenger seated in a vehicle seat equipped with an embodiment of the safety system of the present invention,
- Fig.2:: a schematic plan view of a vehicle equipped with an embodiment of the of the safety system of the present invention.

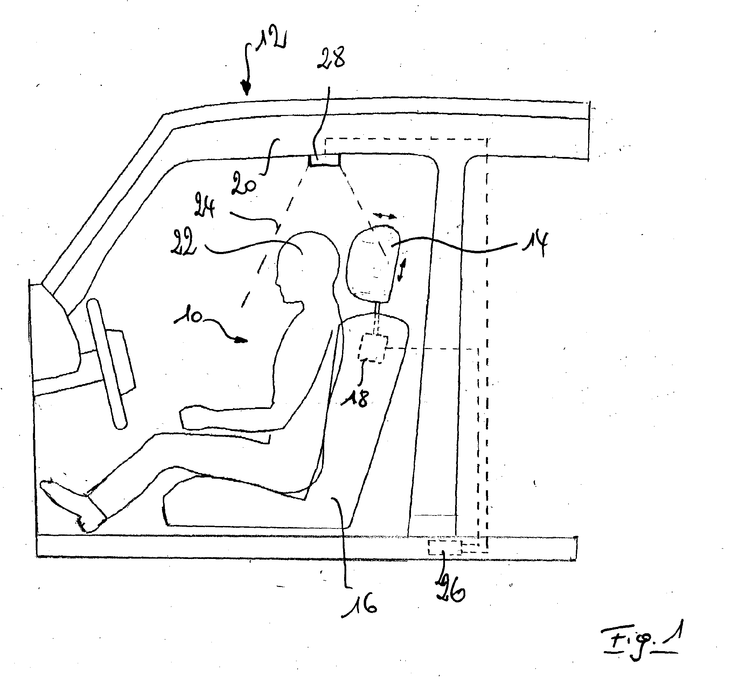

Fig. 1 schematically shows a passenger 10 seated in a vehicle 12 equipped with an embodiment of the safety system according to the present invention.

The safety system comprises a movable headrest 14 associated with a vehicle seat 16 and an actuator 18 for adjusting a position of said headrest 14 with respect to the vehicle seat 16. An optical imager system 28 is mounted in the vehicle interior, e.g. in or on the head lining 20, so that a head 22 of the passenger 10 and the headrest 14 are localized within the field of view 24 of the imager system.

The imager system is used to determine the position of the head 22 of the passenger 10 and of the headrest 14 for obtaining a relative position of the two. The information so obtained is used by a control unit 26 for generating a control signal for the actuator 18. The generated control signal controls the actuator 18 for adjusting the vertical position and/or the horizontal position of the headrest with respect to the passenger head 22.

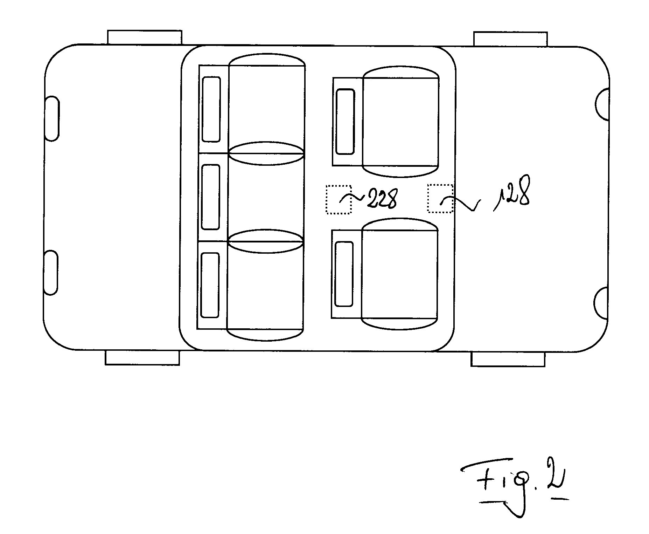

Fig. 2 shows a possible embodiment of a safety system in a vehicle for protection of the front passengers and the rear seat passengers. In the shown embodiment, a first imager system 128 is associated with both front seats so that both seats are in the field of view of the imager system. A second imager system 228 is arranged in the vehicle so as to be able to determine the relevant positions with respect to the rear seats.

It should be noted that besides the position of the headrest, the safety system of the present invention may also be used to adjust, after getting a signal of a pre-crash sensing system, the seat's backrest position so that it provides optimized restraint functionality.

### List of reference numerals

- 10: passenger
- 12: vehicle
- 14: headrest
- 16: vehicle seat
- 18: actuator
- 20: head lining
- 22: passenger head
- 24: field of view
- 26: control unit
- 28, 128, 228: optical imager system

## Claims

1. Safety system for an automotive vehicle, comprising a headrest associated with a vehicle seat, and an actuator for adjusting a position of said headrest with respect to the vehicle seat, **characterized by**
an optical imager system associated with said vehicle seat, said optical imager system for determining a position of a seat occupant portion, and
a control unit operatively coupled to said optical imager system and to said actuator, said control unit for generating a control signal for said actuator based on the position determined by said optical imager system and on an actual position of said headrest, said control signal controlling said actuator for moving the headrest in a predetermined position with respect to the seat occupant portion.

2. Safety system according to claim 1, wherein said actual position of said headrest is determined by means of said optical imager system.

3. Safety system according to claim 1 or 2, wherein said actual position of said headrest is determined by means of a dedicated headrest position sensor, said headrest position sensor being operatively coupled to said control unit.

4. Safety system according to any one of claims 1 to 3, wherein said optical imager system comprises a 3D camera or a stereo-camera system or at least two 2D cameras, said two 2D cameras being arranged in the vehicle interior at a certain distance from each other, or a single 2D camera, said single 2D camera being arranged in said vehicle interior so that a field of view of said 2D camera includes a lateral view of said seat occupant portion and/or said headrest, or any combination thereof.

5. Safety system according to any one of claims 1 to 4, wherein said control signal is generated so that said headrest position is adjusted in a vertical direction.

6. Safety system according to any one of claims 1 to 5, wherein said control signal is generated so that said headrest position is adjusted in a horizontal direction.

7. Safety system according to any one of claims 1 to 6, wherein said control signal is generated during normal operation of the car.

8. Safety system according to any one of claims 1 to 7, wherein said control signal is only generated in a crash situation or immediately prior to crash-situation of said car.

9. Safety system according to any one of claims 1 to 8, wherein said optical imager system is associated to a plurality of vehicle seats for determining the position of seat occupant portion of seat occupants sitting in any one of said plurality of vehicle seats.

10. Method for adjusting a position of a headrest associated to a vehicle seat, comprising the steps of
determining the position of a seat occupant portion by means of an optical imager system,
determining a position of said headrest;
for generating a control signal for said actuator based on the position determined by said optical imager system and on an actual position of said headrest, said control signal controlling said actuator for moving the headrest in a predetermined position with respect to the seat occupant portion.
